(19) Europäisches Patentamt
European Patent Office
Office européen des brevets

(11) **EP 1 035 992 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.7: **B60R 21/32**

(21) Anmeldenummer: **98966203.6**

(22) Anmeldetag: **08.12.1998**

(86) Internationale Anmeldenummer:
**PCT/DE98/03610**

(87) Internationale Veröffentlichungsnummer:
**WO 99/29540 (17.06.1999 Gazette 1999/24)**

(54) **ZÜNDSCHALTUNG UND VERFAHREN ZUM BETREIBEN DERSELBEN**

IGNITION CIRCUIT AND METHOD FOR OPERATING THE SAME

CIRCUIT D'ALLUMAGE ET PROCEDE PERMETTANT DE LE FAIRE FONCTIONNER

(84) Benannte Vertragsstaaten:
**DE FR GB IT**

(30) Priorität: **09.12.1997 DE 19754654**

(43) Veröffentlichungstag der Anmeldung:
**20.09.2000 Patentblatt 2000/38**

(73) Patentinhaber: **SIEMENS AKTIENGESELLSCHAFT**
**80333 München (DE)**

(72) Erfinder: **HERMANN, Stefan**
**D-93096 Köfering (DE)**

(56) Entgegenhaltungen:
| | |
|---|---|
| EP-A- 0 615 886 | DE-A- 4 409 019 |
| DE-C- 19 624 357 | US-A- 3 949 357 |
| US-A- 5 204 547 | US-A- 5 549 325 |

**Beschreibung**

Die Erfindung betrifft ein Verfahren zum Betreiben einer Zündschaltung gemäß dem Oberbegriff des Patentanspruchs 1. Weiterhin ist die Erfindung auf eine entsprechend ausgelegte Zündschaltung gerichtet (gemäß dem Oberbegriff des Anspruchs 2). Solche Zündschaltungen dienen zum Zünden einer oder mehrerer Zündpillen im Bedarfsfall, wenn eine Zündung einer pyrotechnischen Ladung gewünscht ist. Solche Zündschaltungen können allgemein zum Auslösen von Sprengvorgängen Verwendung finden, werden bei der vorliegenden Erfindung jedoch vorzugsweise in Insassenschutzsystemen von Kraftfahrzeugen eingesetzt, insbesondere für Rückhaltesysteme, zum Beispiel Gurtstrammersysteme oder Airbagsysteme.

Ein dem Oberbegriff des Patentanspruchs 1 bzw. 2 vergleichbares System ist Gegenstand der EP 0 615 886 A1.

Aus der US 3 949 357 ist eine Zündschaltung bekannt, bei der die Zündpille in Reihe mit zwei Schaltern angeordnet ist, die bei einer Fahrzeugkollision geschlossen werden, das heißt als Crash-Sensoren dienen. Die Zündschaltung wird durch eine Batterie gespeist, die die notwendige Zündenergie bereitstellt.

Es ist auch bekannt (DE 44 09 019 A1), die Zündschaltung mit einer eigenen Zündkondensatoranordnung zu versehen, die während des normalen Kraftfahrzeugbetriebs durch einen von der Kraftfahrzeugbatterie gespeisten Spannungs- oder Stromgenerator auf eine vorgegebene Ladespannung aufgeladen wird. Die Zündkondensatoranordnung besteht im einfachsten Fall aus einem einzigen Zündkondensator, der parallel zu dem Spannungsoder Stromgenerator geschaltet ist, kann aber auch zwei oder mehrere parallel oder seriell geschaltete Zündkondensatoren enthalten.

Die DE 196 24 357 C1 offenbart eine Zündkreisschaltung für einen Airbag, bei der wahlweise eine ungeregelte Stromentnahme oder eine mit geregeltem und begrenztem Ausgangsstrombetrieb geregelte Stromentnahme aus einem Energiespeicher vcrgenommen wird.

Die bei einer Fahrzeugkollision zu zündende Zündpilie ist herstellerseitig mit bestimmten Spezifikationen versehen, die den zur sicheren Zündung minimal erforderlichen Stromwert und die minimal erforderliche Stromflußdauer festlegen.

Wenn eine Zündung der Zündpille oder Zündpillen erfolgt ist, verbleibt in dem oder den Zündkondensator(en) naturgemäß eine nicht verbrauchte Restenergiemenge, die nicht ausgenutzt werden kann, jedoch eine überdimensionierte Auslegung des oder der Zündkondensatoren und damit eine entsprechende Größe des oder der Zündkondensatoren bedingt.
Der Erfindung liegt die Aufgabe zugrunde, ein Verfahren zum Betreiben einer Zündschaltung zu schaffen, das eine kompakte Ausgestaltung der Zündschaltung und eine gute Energieausnutzung ermöglicht.

Diese Aufgabe wird mit den im Patentanspruch 1 genannten Maßnahmen gelöst.

Weiterhin wird mit der Erfindung eine Zündschaltung gemäß dem Patentanspruch 2 geschaffen, die eine gute Zündenergieausnutzung und einen kompakten Schaltungsaufbau ermöglicht.

Bei der Erfindung wird der im Zündfall in die Zündpille (oder Zündpillen) fließende Strom auf den minimal für die Zündpille erforderlichen Strom oder einen definiert etwas größer gewählten Strom, begrenzt, und die Ladespannung des oder der Zündkondensatoren in Abhängigkeit von dem festgelegten Zündstrom und dem Innenwiderstand der Zündpille berechnet und eingestellt. Weiterhin wird der Kapazitätswert des oder der Zündkondensatoren gezielt in Abhängigkeit von der minimal für die Zündpille(n) erforderlichen Stromflußdauer, dividiert durch den Innenwiderstand der Zündpille(n), berechnet und entsprechend dimensioniert.

Durch diese Vorgehensweise läßt sich gezielt erreichen, daß die in dem oder den Zündkondensatoren nach einer Zündung ungenutzt verbleibende Energie und die am Zündpillenschalter bzw. im Strombegrenzer verbrauchte Energie auf ein Minimum gebracht sind. Damit sind das Verfahren und die Zündschaltung so ausgelegt, daß die in dem oder den Zündkondensatoren gespeicherte Zündenergie optimal für den Zündvorgang ausgenutzt wird, so daß der Kapazitätswert und damit die Größe des oder der Zündkondensatoren auf einen optimal kleinen Wert eingestellt werden können. Damit lassen sich die Energieausnutzung und die Ladespannung optimieren und gleichzeitig die Abmessungen der Zündschaltung aufgrund der Verwendung eines kleineren Zündkondensators minimieren. Die Ladespannung und der Kapazitätswert können hierbei auf die jeweils erforderlichen Minimalwerte eingestellt werden. Aus Sicherheitsgründen kann jedoch auch vorgesehen sein, daß die Ladespannung und/oder der Kapazitätswert um eine Sicherheitsschwelle von beispielsweise 20 %, vorzugsweise von 10 %, oberhalb der berechneten Werte gewählt werden.

Die Erfindung wird nachstehend anhand eines Ausführungsbeispiels unter Bezugnahme auf die Zeichnungen näher beschrieben.

Fig. 1    zeigt ein Ausführungsbeispiel der erfindungsgemäßen Zündschaltung, und

Fig. 2    zeigt eine Darstellung des Spannungs- und Stromverlaufs bei einem Zündvorgang.

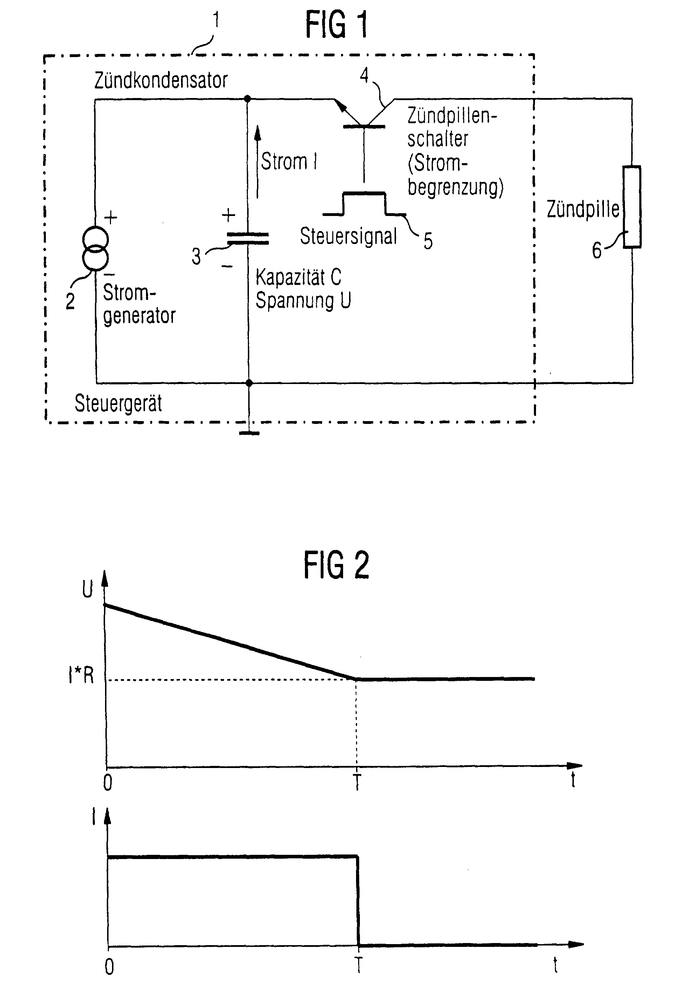

Die in Fig. 1 dargestellte Zündschaitung enthält ein Steuergerät 1, das einen Bestandteil eines Insassenschutzsystems eines Kraftfahrzeugs darstellt und Signale von einem oder mehreren, nicht dargestellten, im Kraftfahrzeug angeordneten Unfailsensoren empfängt. Das Steuergerat 1 ist mit dem Bordnetz zur Energieversorgung verbunden und einem nicht dargestellten Mikroprozessor versehen, der die Signale der Unfallsensoren auswertet und bei Erfassung eines Unfalls eine mit dem Steuergerät 1 verbundene Zündpille 6 des Insassenschutzsystems, beispielsweise die Zündpille eines Airbags, aktiviert. Mit dem Steuergerät 1 können auch zwei oder mehr Zündpillen 6 verbunden sein, die gefahrensituationsbedingt durch das Steuergerät 1 angesteuert werden.

Das Steuergerät 1 enthält intern einen Stromgenerator 2, der seine Eingangsenergie aus dem Kraftfahrzeug-Bordnetz bezieht und einen parallel zu ihm geschalteten Zündkondensator 3 auf eine vorgegebene Ladespannung auflädt. Anstelle eines Stromgenerators 2 kann auch ein Spannungsgenerator vorgesehen sein. Weiterhin können zusätzlich zu dem Zündkondensator 3 auch ein oder mehrere weitere Zündkondensatoren vorgesehen sein, die parallel und/oder in Reihe mit dem Zündkondensator 3 geschaltet sind. In der von dem Zündkondensator 3 zu der Zündpille 6 führende Leitung ist ein Schalter (Zündpillenschalter) 4 vorgesehen, der durch das Steuergerät 1 bei notwendiger Zündung der Zündpille 6 durch ein schematisch dargestelltes, impulsförmiges und an die Basis des als Transistor ausgebildeten Schalters 4 angelegtes Steuersignal 5 eingeschaltet wird. Der Schalter 1 ist mit einem nicht dargestellten Strombegrenzer versehen, der separat vom Schalter 4 ausgebildet oder integriert in dem Schalter 4 enthalten sein kann. Der Strombegrenzer kann in üblicher Weise ausgestattet sein und begrenzt den zur Zündpille 6 fließenden Strom. Der Strombegrenzungswert ist vorzugsweise direkt auf den zündpillenspezifisch vom Hersteller vorgegebenen, minimal zur zuverlässigen Zündung erforderlichen Stromwert eingestellt, kann aus Sicherheitsgründen aber auch auf einen hoheren Wert eingestellt werden, der im Bereich des 1,0- bis 1,2-fachen des minimal erforderlichen Stromwerts, beispielsweise bei dem 1,1-fachen liegt.

Allgemein steigt die in dem oder den Zundkondensator(en) 3 gespeicherte Energie proportional mit der Zündkondensatorkapazität und mit dem Quadrat der angelegten Ladespannung, auf die der Zündkondensator aufgeladen werden soll, an. Herkömmlicherweise werden die Zündkondensatoren daher auf die größtmögliche, in der Schaltung vorhandene Spannung aufgeladen. Im Gegensatz hierzu wird mit der Erfindung ein Verfahren zum optimierten Dimensionieren des Kapazitätswerts des Zündkondensators (oder der Zundkondensatoren) 3 und der Ladespannung (Anfangsspannung des Zündkondensators) vorgestellt. Abhängig von dem bekannten, zündpillenabhängigen Zündpillenwiderstand R, dem Strombegrenzungswert des Zündpillenstroms (vorzugsweise dem minimal erforderlichen Strom) und der ebenfalls zündpillenspezifisch vorgegebenen, zur sicheren Zündung erforderlichen minimalen Stromflußdauer werden optimale Werte für die Kapazität $C_0$ des Zündkondensators 3 und die Ladespannung (Anfangsspannung) $U_0$ des Zündkondensators 3 ermittelt.

In Fig. 2 ist allgemein in der oberen Hälfte der Verlauf der Spannung am Zündkondensator 3 bei einem Zündvorgang dargestellt, wobei auf der Abszisse die Zeit t und auf der Ordinate die Spannung U des Zündkondensators 3 aufgetragen ist. Die Zeit T bezeichnet die minimal zur sicheren Zündung erforderliche Stromflußdauer. Mit "I*R" ist die am Zündkondensator 3 nach Abschluß des Zündvorgangs noch vorhandene Spannung repräsentiert. Im unteren Kurvenzug ist der Zündstromverlauf, und damit der Kondensatorstrom, dargestellt. Wie ersichtlich, wird der Strom I zum Zeitpunkt O (Unfallerfassungs-Zeitpunkt) eingeschaltet und sofort auf einen konstanten, vorzugsweise den minimal erforderlichen Stromwert begrenzt und fließt dann konstant bis zum Zeitpunkt T, das heißt für das minimal erforderliche Zeitintervall. Danach wird er durch Öffnen des Schalters wieder ausgeschaltet. Die konstante Stromentnahme aus dem Zündkondensator 3 führt zu dem im oberen Kurvenzug gezeigten, linearen Abfall der Kondensatorspannung während des Zündintervalls. Der im unteren Kurvenzug gezeigte zeitliche Stromverlauf entspricht hierbei dem zeitlichen Spannungsverlauf des an den Schalter 4 angelegten Steuersignals 5.

Für das Auffinden und Einstellen der optimalen Werte werden die folgenden Gleichungen zugrunde gelegt:

$$U = R*I + I*T/C \qquad (1)$$

$$F = C*U^2/2 - R*I^2*T = minim \qquad (2)$$

In der Gleichung (2) ist mit "$C*U^2/2$" die im Zündkondensator 3 anfänglich (vor einer Zündung) gespeicherte Energie bezeichnet, wohingegen mit "$R*I^2*T$" die in die Zündpille 6 ein gespeiste Energie bezeichnet ist. Die Differenz F ist die nicht zur Zündung ausgenutzte Energie, die am Schalter 4 (und/oder am Strombegrenzer) verbraucht wird bzw. im Zündkondensator 3 gespeichert bleibt. Zur Ermittlung des Minimalwerts von F wird dieser Ausdruck nach der Spannung U differenziert (minimiert), so daß sich die nachstehend angegebene, zu den Gleichungen (1) und (2) äquivalente Gleichung (3) ergibt:

$$dF/dU = \frac{(I * T * U)}{(U - R * I)^2}*(U - 2RI) = 0 \qquad (3)$$

Anhand der Gleichungen (3) und (1) werden die Werte für die Ladespannung bzw. Anfangsspannung $U_0$ und des Kapazitätswerts $C_0$ des Zündkondensators 3 berechnet:

$$U_0 = 2*R*I \qquad und \qquad C_0 = T/R \qquad (4)$$

Der optimale Wert der Ladespannung $U_0$ entspricht somit dem Doppelten des Produkts aus Zündpillenwiderstand und (konstantem, strombegrenztem) Zündstrom I. Der optimale, das heißt minimal kleine Kapazitätswert $C_0$ des Zündkondensators 3 entspricht der minimalen Stromflußdauer T, dividiert durch den Zündpillenwiderstand R. Die tatsächlich in der erfindungsgemäßen Zündschaltung eingesetzten Werte für die Ladespannung und den Kapazitätswert entsprechen vorzugsweise direkt den angegebenen Werten, können aus Sicherheitsgründen aber auch etwas höher gewählt, beispielsweise um bis zu 20 %, vorzugsweise um nur bis zu 10 % höher gewählt werden.

Als Kriterium zur Berechnung der optimalen Werte für die Kapazität und die Ladespannung wird somit die minimale, in der Zündschaltung bei einem Zündvorgang verfallende, das heißt nicht zur Zündung ausgenutzte Energie verwendet. Das ermittelte Minimum des Kapazitätswerts $C_0$ führt zugleich auch zu einem Zündkondensator mit der kleinsten Bauform, so daß die Zündschaltung insgesamt sehr kompakt ausgelegt werden kann. Ferner gibt sich zugleich auch eine Minimierung der Verlustleistung an dem strombegrenzenden Schalter 4.

**Patentansprüche**

1. Verfahren zum Betreiben einer Zündschaltung, die zur Ansteuerung mindestens einer Zündpille (6) eines Zündsystems, insbesondere eines Insassenschutzsystems eines Kraftfahrzeugs, ausgelegt ist und mindestens einen Zündkondensator (3) zur Speicherung der zur Zündung der Zündpille (6) erforderlichen Energie sowie einen die Verbindung zwischen dem mindestens einen Zündkondensator (3) und der Zündpille (6) steuernden Schalter (4) enthält, wobei die Zündpille (6) einen bestimmten Innenwiderstand (R) aufweist und zur Zündung mit einem Strom (I), der mindestens gleich groß wie ein vorgegebener minimaler Stromwert ist, für mindestens eine bestimmte minimale Zeitdauer (T) gespeist werden muß, **dadurch gekennzeichnet, daß** der mindestens eine Zündkondensator (3) auf eine Ladespannung ($U_0$) aufgeladen wird, die auf das 2,0- bis 2,4-fache des Produkts aus dem Innenwiderstand (R) der Zündpille (6) und dem bei einer Zündung in die Zündpille (6) eingespeisten Strom (I) eingestellt ist, daß der Strom (I) bei einer Zündung auf einen Wert begrenzt wird, der dem 1,0- bis 1,2-fachen des minimalen Stromwerts entspricht, und daß der mindestens eine Zündkondensator (3) einen Kapazitätswert ($C_0$) aufweist, der dem 1,0- bis 1,2-fachen der minimalen Zeitdauer (T), dividiert durch den Innenwiderstand (R) der Zündpille (6), entspricht.

2. Zündschaltung mit mindestens einer Zündpille (6), die einen vorgegebenen Innenwiderstand (R) aufweist und zur Zündung mit einem Strom (I), der mindestens gleich einem vorgegebenen minimalen Stromwert ist, für mindestens eine vorgegebene minimale Zeitdauer (T) gespeist werden muß, mindestens einem Zündkondensator (3), der durch eine Spannungs- oder Stromquelle (2) auf eine bestimmte Ladespannung ($U_0$) aufgeladen wird, einem Schalter (4) zur Verbindung des mindestens einen Zündkondensators (3) mit der Zündpille (6) bei erforderlicher Zündung, und einem Strombegrenzer, **dadurch gekennzeichnet, daß** der Strombegrenzer (4) den zur Zündpille (6) während deren Zündung fließenden Strom (I) auf das 1,0- bis 1,2-fache des minimalen Stromwerts begrenzt, wobei die Ladespannung ($U_0$) des Zündkondensators (3) auf das 2,0- bis 2,4-fache des Produkts aus dem in die Zündpille (6) fließenden, begrenzten Strom (I) und dem Innenwiderstand (R) der Zündpille (6) festgelegt ist, und wobei der Kapazitätswert ($C_0$) des mindestens einen Zündkondensators (3) auf das 1,0-bis 1,2-fache der minimalen Zeitdauer (T), dividiert durch den Innenwiderstand (R), festgelegt ist.

3. Zündschaltung nach Anspruch 2, **dadurch gekennzeichnet, daß** der Strombegrenzer in den Schalter (4) integriert ist.

4. Zündschaltung nach Anspruch 2 oder 3, **dadurch gekennzeichnet, daß** sie einen Bestandteil eines Kraftfahrzeug-Insassenschutzsystems, insbesondere eines Airbag-Systems, darstellt.

**Claims**

1. Method for operating a firing circuit which is designed to actuate at least one firing cap (6) of a firing system, in particular of a vehicle occupant protection system of a motor vehicle, and at least one firing capacitor (3) for storing the energy necessary to fire the firing cap (6), and contains a switch (4) which controls the connection between the at least one firing capacitor (3) and the firing cap (6), the firing cap (6) having a certain internal resistance (R) and having to be supplied, in order to fire it, with a current (I) which is at least as high as a predefined minimum current value, for at least a specific minimum time period (T), **characterized in that** the at least one firing capacitor (3) is charged to a charge voltage ($U_0$) which is set to be 2.0 to 2.4 times the product of the internal resistance (R) of the firing cap (6) and the current (I) fed into the firing cap (6) during a firing operation, **in that** the current (I) is limited, during a firing operation, to a value which corresponds to 1.0 to 1.2 times the minimum current value, and **in that** the at least one firing capacitor (3) has a capaci-

tance value ($C_0$) which corresponds to 1.0 to 1.2 times the minimum time period (T) divided by the internal resistance (R) of the firing cap (6).

2. Firing circuit having at least one firing cap (6) which has a predefined internal resistance (R) and, in order to fire it, has to be supplied with a current (I) which is at least equal to a predefined minimum current value, for at least a predefined minimum time period (T), at least one firing capacitor (3) which is charged to a specific charge voltage ($U_0$) by a voltage or current source (2), a switch (4) for connecting the at least one firing capacitor (3) to the firing cap (6) when firing is necessary, and a current limiter, **characterized in that** the current limiter (4) limits the current (I) flowing to the firing cap (6) during its firing to 1.0 to 1.2 times the minimum current value, the charge voltage ($U_0$) of the firing capacitor (3) being set to 2.0 to 2.4 times the product of the limited current (I) flowing into the firing cap (6) and the internal resistance (R) of the firing cap (6), and the capacitance value ($C_0$) of the at least one firing capacitor (3) being set to 1.0 to 1.2 times the minimum time period (T) divided by the internal resistance (R).

3. Firing circuit according to Claim 2, **characterized in that** the current limiter is integrated into the switch (4).

4. Firing circuit according to Claim 2 or 3, **characterized in that** it constitutes a component of a motor vehicle occupant system, in particular of an airbag system.

## Revendications

1. Procédé de fonctionnement d'un circuit d'allumage, conçu pour la commande d'au moins une pastille fulminante ou amorce (6) d'un système d'allumage, en particulier d'un système de protection des passagers d'un véhicule automobile, et comprenant au moins un condensateur d'allumage (3) pour stocker l'énergie nécessaire à l'allumage de la pastille fulminante (6), ainsi qu'un interrupteur (4) commandant la liaison entre le au moins un condensateur d'allumage (3) et la pastille fulminante (6), la pastille fulminante (6) présentant une résistance intérieure (R) de valeur déterminée et, pour assurer l'allumage, devant être alimentée par un courant (I), qui est au moins de valeur égale à une intensité minimale prédéterminée, pendant au moins un intervalle de temps (T) minimal déterminé, **caractérisé en ce que** le au moins un condensateur d'allumage (3) est chargé à une tension de charge ($U_0$) qui est réglée à 2,0 à 2,4 fois la valeur du produit de la résistance intérieure (R) de la pastille fulminante (6) et de l'intensité (I) injectée lors d'un allumage dans la pastille fulminante (6), **en ce que**, lors d'un allumage, l'intensité (I) est limitée à une valeur qui correspond à 1,0 à 1,2 fois la valeur d'intensité minimale, et **en ce que** le au moins un condensateur d'allumage (3) présente une valeur de capacité ($C_0$) correspondant à 1,0 jusqu'à 1,2 fois la durée (T) minimale, divisée par la résistance intérieure (R) de la pastille fulminante (6).

2. Circuit d'allumage comportant au moins une pastille fulminante (6), présentant une résistance intérieure (R) de valeur prédéterminée et qui, pour l'allumage, doit être alimentée par un courant (I) d'intensité au moins égale à une valeur d'intensité minimale prédéterminée, pendant au moins un intervalle de temps (T) minimal prédéterminé, au moins un condensateur d'allumage (3), qui est chargé à une tension de charge ($U_0$) déterminée par une source de tension ou de courant (2), un interrupteur (4) pour assurer la connexion du au moins un condensateur d'allumage (3) avec la pastille fulminante (6) lorsque l'allumage est nécessaire, et un limiteur de courant, **caractérisé en ce que** le limiteur de courant (4) limite le courant (I) passant dans la pastille fulminante (6), pendant son allumage, à une valeur comprise dans la plage de 1,0 à 1,2 fois la valeur d'intensité minimale, la tension de charge ($U_0$) du condensateur d'allumage (3) étant fixée à 2,0 à 2,4 fois le produit de l'intensité (I) limitée, passant dans la pastille fulminante (6), et de la résistance intérieure (R) de la pastille fulminante (6), et la valeur de la capacité ($C_0$) du au moins un condensateur d'allumage (3) étant fixée à 1,0 à 1,2 fois la durée (T) minimale, divisée par la résistance intérieure (R).

3. Circuit d'allumage selon revendication 2, **caractérisé en ce que** le limiteur d'intensité est intégré dans l'interrupteur (4).

4. Circuit d'allumage selon revendication 2 ou 3, **caractérisé en ce qu'**il constitue un composant d'un système de protection des passagers d'un véhicule automobile, en particulier d'un système à Airbag.

# FIG 1

Zündkondensator

4

Zündpillenschalter
(Strombegrenzung)

Strom I

Steuersignal — 5

Zündpille

6

+

+

3

−

−

2 Stromgenerator

Kapazität C
Spannung U

Steuergerät

1

# FIG 2

U

I*R

0                    T                    t

I

0                    T                    t